# EUROPEAN PATENT SPECIFICATION

(11) **EP 3 473 517 B1**
(45) Date of publication and mention of the grant of the patent: **19.08.2020**
(21) Application number: 16908755.8
(22) Date of filing: 11.07.2016
(51) Int. Cl.: B61H 13/00, B60T 8/00, B60L 15/42, B60T 13/66, B60T 17/22

(54) **RAIL VEHICLE BRAKE CONTROL DEVICE AND RAIL VEHICLE BRAKE CONTROL METHOD**
VORRICHTUNG ZUR STEUERUNG VON SCHIENENFAHRZEUGBREMSEN UND VERFAHREN ZUR STEUERUNG VON SCHIENENFAHRZEUGBREMSEN
DISPOSITIF DE COMMANDE DE FREIN DE VÉHICULE FERROVIAIRE ET PROCÉDÉ DE COMMANDE DE FREIN DE VÉHICULE FERROVIAIRE

(43) Date of publication of application: 24.04.2019
(73) Proprietor: Mitsubishi Electric Corporation, Chiyoda-ku Tokyo 100-8310 (JP)
(72) Inventor: YAMADA Hiroshi, Tokyo 100-8310 (JP)
(74) Representative: Witte, Weller & Partner Patentanwälte mbB
(86) International application number: PCT/JP2016/070417
(87) International publication number: WO 2018/011851

(56) References cited:
- JP-A- H11 321 649
- JP-A- 2008 189 130
- JP-A- 2013 230 009

## Description

### Technical Field

The present invention relates to a brake control device for a rail vehicle and a method of controlling a brake for rail vehicles.

### Background Art

In a train, each vehicle or each bogie is provided with a brake control unit (BCU). A braking command is sent from, for example, a brake operating device to each BCU. In a case where a train includes two or more BCUs, occurrence of a difference between responses of the BCUs to braking commands needs to be suppressed or prevented.

Patent Literature 1 discloses a braking command converting device for a train in which pneumatically-command vehicles and electrically-command vehicles are alternately connected, where the braking command converting device converts pneumatic commands for the pneumatically-command vehicles into digital electric commands for the electrically-command vehicles. A pneumatic command for the first pneumatically-command vehicle is transmitted to the second pneumatically-command vehicle that is connected to the first pneumatically-command vehicle across an electrically-command vehicle. The braking command converting device makes a correction for advancing a rise in and a fall in an electric command to reduce a difference between responses to braking commands for the vehicles. Document JP 2013-230009 A and JP 2008-189130 A disclose a network used for brake control. Document JP H11-321649 discloses synchronization of brake action in a train comprizing pneumatic brake controllers.

### Citation List

### Patent Literature

Patent Literature 1: Unexamined Japanese Utility Model Application Kokai Publication No. H05-049547

### Summary of Invention

### Technical Problem

Time difference in responses to braking commands caused by conversion between a pneumatic command and an electric command does not occur in a train in which all of the vehicles are electrically-command vehicles. In a case where BCUs are connected to one another via Ethernet (registered trademark) or controller area network (CAN) buses in such a train, there is a delay of about tens of microseconds in transmitting a braking command. Meanwhile, central processing units (CPU) of the BCUs are independent from one another, and thus there may be a delay of tens of milliseconds to hundreds of milliseconds. As a result, the device of Patent Literature 1 has a problem in that there is a difference of tens of milliseconds to hundreds of milliseconds between actuation times of brake devices included in each vehicle or in each bogie. Occurrence of the difference between the actuation times of the brake devices causes load on a wheel or a vehicle coupler, and thus decreases the lifetime of the wheel or the vehicle coupler.

In order to solve the aforementioned problem, an objective of the present disclosure is to, in a train including brake controllers, suppress or prevent a difference between the brake controllers in timing of brake control.

### Solution to Problem

In order to achieve the aforementioned objective, a rail vehicle brake control device of the present disclosure includes brake controllers at least one of which each bogie or each vehicle of a train includes. Each of the brake controllers includes a communicator, a command acquirer, a timing controller, and a start controller. The communicator transmits or receives a communication frame including a synchronization frame. The command acquirer acquires a drive command including at least one of a braking command indicating deceleration of the train or a powering command indicating acceleration of the train. The timing controller detects the synchronization frame of the communication frame transmitted or received by the communicator and outputs an interrupt signal each time the timing controller detects the synchronization frame. Each time the timing controller outputs the interrupt signal, the start controller starts brake control for adjusting a braking force produced by a brake in accordance with at least one of (i) a deceleration indicated by the braking command included in a drive command most-recently acquired by the command acquirer or (ii) an acceleration indicated by the powering command included in the most-recently acquired drive command.

### Advantageous Effects of Invention

According to the present disclosure, a difference between the brake controllers in timing of brake control can be suppressed or prevented by causing each of the brake controllers to start brake control at timing of a synchronization frame included in a communication frame transmitted or received by each of the brake controllers.

### Brief Description of Drawings

FIG. 1 is a block diagram illustrating an example configuration of a rail vehicle brake control device according to Embodiment 1 of the present disclosure;
FIG. 2 is a drawing illustrating examples of timing at which brake controllers according to Embodiment 1 start brake control;
FIG. 3 is a block diagram illustrating example configurations of a valve controller and a pneumatic controller according to Embodiment 1;
FIG. 4 is a drawing illustrating an example of a train equipped with the rail vehicle brake control device according to Embodiment 1;
FIG. 5 is a drawing illustrating another example of the train equipped with the rail vehicle brake control device according to Embodiment 1;
FIG. 6 is a block diagram illustrating another example configuration of the rail vehicle brake control device according to Embodiment 1;
FIG. 7 is a drawing illustrating examples of timing at which brake controllers for rail vehicles according to Embodiment 2 of the present disclosure start brake control;
FIG. 8 is a drawing illustrating examples of the timing at which the brake controllers for rail vehicles according to Embodiment 2 start brake control;
FIG. 9 is a block diagram illustrating an example configuration of a rail vehicle brake control device according to Embodiment 3 of the present disclosure;
FIG. 10 is a drawing illustrating an example of a change in a braking force in Embodiment 3; and
FIG. 11 is a drawing illustrating examples of timing at which brake controllers for rail vehicles according to Embodiment 3 start brake control.

### Description of Embodiments

Embodiments of the present disclosure are described in detail hereinafter with reference to drawings. Components that are the same or equivalent are assigned the same reference signs throughout the drawings.

### (Embodiment 1)

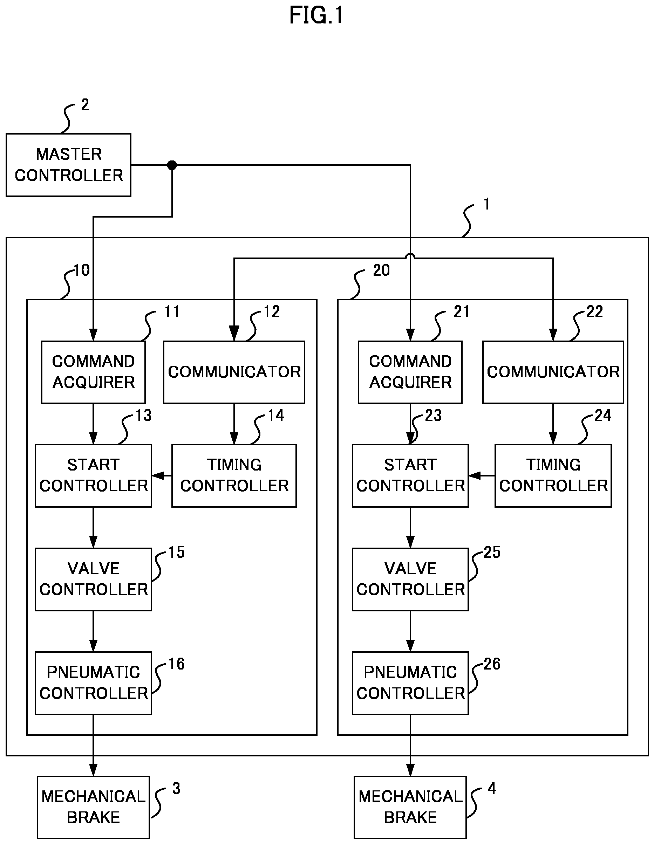

FIG. 1 is a block diagram illustrating an example configuration of a rail vehicle brake control device according to Embodiment 1 of the present disclosure. A rail vehicle brake control device 1 (hereinafter referred to as "brake control device 1") is provided with brake controllers 10 and 20. The brake controllers 10 and 20 have the same configuration. The brake controller 10 includes a command acquirer 11 to acquire a drive command from a master controller 2, a communicator 12 to transmit or receive a communication frame including a synchronization frame, a start controller 13 to perform brake control in accordance with the drive command, a timing controller 14 to control timing of brake control by the start controller 13, a valve controller 15 to control a magnet valve included in a pneumatic controller 16 in accordance with a command from the start controller 13, and the pneumatic controller 16 to output air adjusted by the operation of the magnet valve. The air outputted by the pneumatic controller 16 is sent to a brake cylinder included in a mechanical brake 3 thereby actuating the mechanical brake 3. Alternatively, a brake device controlled by pressure of any fluid other than air, for example, such as oil, may be used as the mechanical brake 3.

Similarly, the brake controller 20 includes a command acquirer 21 to acquire the drive command from the master controller 2, a communicator 22 to transmit or receive a communication frame including a synchronization frame, a start controller 23 to perform brake control in accordance with the drive command, a timing controller 24 to control timing of brake control by the start controller 23, a valve controller 25 to control a magnet valve included in a pneumatic controller 26 in accordance with a command from the start controller 23, and the pneumatic controller 26 to output air adjusted by the operation of the magnet valve. The air outputted by the pneumatic controller 26 is sent to a brake cylinder included in a mechanical brake 4 thereby actuating the mechanical brake. Synchronization of the timing of the brake control by the brake controller 10 and the timing of the brake control by the brake controller 20 by the use of the synchronization frames included in the communication frames enables suppression or prevention of a difference between the brake controllers 10 and 20 in timing of brake control.

Operation of each component of the brake control device 1 is described below. The communicators 12 and 22 transmit or receive the communication frame including the synchronization frame. Operations of the brake controllers 10 and 20 are described below using, as an example, a case where the communicator 12 transmits to the communicator 22 the communication frame including the synchronization frame. The command acquirer 11 acquires a drive command from the master controller 2 that is provided, for example, in a cab, and the drive command includes at least one of a braking command indicating deceleration of the train or a powering command indicating acceleration of the train. The communicator 12 transmits to the communicator 22 the communication frame including the synchronization frame. The timing controller 14 detects the synchronization frame of the communication frame transmitted by the communicator 12 and outputs an interrupt signal to the start controller 13 each time the timing controller 14 detects the synchronization frame.

The start controller 13 detects the output of the interrupt signal by the timing controller 14. The interrupt signal is, for example, a pulse signal, and the start controller 13 detects a rise of the pulse of the interrupt signal transmitted from the timing controller 14 and thereby detects the output of the interrupt signal by the timing controller 14. The start controller 13 starts brake control for adjusting a braking force produced by the mechanical brake 3 as a brake device each time the start controller 13 detects the output of the interrupt signal by the timing controller 14, that is, each time the timing controller 14 outputs the interrupt signal. The start controller 13 starts the brake control in accordance with at least one of deceleration indicated by the braking command included in the drive command most-recently acquired by the command acquirer 11 or acceleration indicated by the powering command included in the most-recently acquired drive command. The start controller 13 transmits a control command to the valve controller 15 to perform the brake control. The control command indicates, for example, pressure of the brake cylinder included in the mechanical brake 3. In a case where the command acquirer 11 acquires the drive command including the powering command, the start controller 13 transmits to the valve controller 15 the control command to reduce the pressure of the brake cylinder included in the mechanical brake 3 each time the timing controller 14 outputs the interrupt signal.

In a case where the command acquirer 11 acquires the drive command including the braking command, the start controller 13 calculates a necessary braking force that is a braking force necessary for obtaining deceleration indicated by the braking command. The start controller 13 calculates the necessary braking force by multiplying the deceleration by load on a vehicle or a bogie that is detected by a non-illustrated variable load detector for example. In a case where each of vehicles is provided with the brake controller 10 or 20, the start controller 13 calculates a necessary braking force for each of the vehicles. In a case where each of bogies is provided with the brake controller 10 or 20, the start controller 13 calculates a necessary braking force for each of the bogies. The start controller 13 transmits to the valve controller 15 a control command indicating the pressure of the brake cylinder included in the mechanical brake 3 in accordance with the necessary force each time the timing controller 14 outputs the interrupt signal.

Operation of the brake controller 20 is similar to the above-described operation of the brake controller 10. The command acquirer 21 acquires a drive command including at least one of a braking command or a powering command from the master controller 2. The communicator 22 receives the communication frame including the synchronization frame from the communicator 12. The timing controller 24 detects the synchronization frame of the communication frame received by the communicator 22 and outputs an interrupt signal to the start controller 23 each time the timing controller 24 detects the synchronization frame.

The start controller 23 detects the output of the interrupt signal by the timing controller 24. The start controller 23 starts brake control for adjusting a braking force of the mechanical brake 4 as a brake device each time the start controller 23 detects the output of the interruption signal by the timing controller 24, that is, each time the timing controller 24 outputs the interruption signal. The start controller 23 starts the brake control in accordance with at least one of deceleration indicated by the braking command included in the drive command most-recently acquired by the command acquirer 21 or acceleration indicated by the powering command included in the most-recently acquired drive command. The start controller 23 performs the brake control by transmitting a control command to the valve controller 25. The control command indicates, for example, pressure of the brake cylinder included in the mechanical brake 4. In a case where the command acquirer 21 acquires the drive command including the powering command, the start controller 23 transmits to the valve controller 25 the control command for decreasing the pressure of the brake cylinder included in the mechanical brake 4 each time the timing controller 24 outputs the interrupt signal.

In a case where the command acquirer 21 acquires the drive command including the braking command, the start controller 23 calculates a necessary braking force that is a braking force necessary for obtaining the deceleration indicated by the braking command. The start controller 23 calculates the necessary braking force in the same manner as the start controller 13 does, that is, the start controller 23 calculates the necessary braking force by multiplying the deceleration by load on a vehicle or bogie detected by a non-illustrated variable load detector. The start controller 23 transmits to the valve controller 25 a control command indicating the pressure of the brake cylinder included in the mechanical brake 4 in accordance with the necessary braking force each time the timing controller 24 outputs the interrupt signal.

The communicators 12 and 22 may be a physical layer (PHY) chip. The start controllers 13 and 23 may be a central processing unit (CPU). The timing controllers 14 and 24 may be a field-programmable gate array (FPGA). Alternatively, the start controllers 13 and 23 may be a FPGA like the timing controllers 14 and 24.

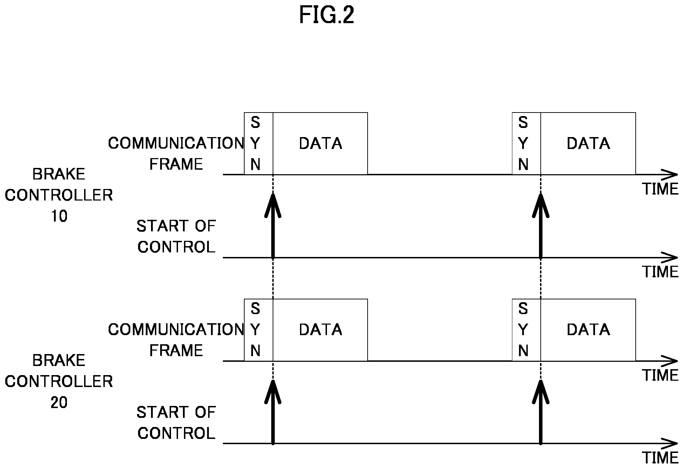

FIG. 2 is a drawing illustrating examples of the timing at which the brake controllers according to Embodiment 1 start brake control. FIG. 2 is a drawing illustrating communication frames that are transmitted or received by the brake controllers 10 and 20 and the timing of the start of brake control by each of the brake controllers 10 and 20. In the example of FIG. 2, a synchronization frame is arranged to be located at the front of each of the communication frames. In a case where a communication protocol is a high-level data link control (HDCL), the synchronization frames have the pattern 01111110. In each of the communication frames, information on malfunction of a vehicle-mounted device, control information, information on a velocity of the train and the like are transmitted or received as data following the synchronization frame. The timing controller 14 outputs the interrupt signal each time the timing controller 14 detects the synchronization frame of the communication frame transmitted by the communicator 12. The start controller 13 starts the brake control each time the timing controller 14 outputs the interrupt signal, that is, at the timing of the synchronization frame as illustrated in FIG. 2. Also, the timing controller 24 outputs the interrupt signal each time the timing controller 24 detects the synchronization frame of the communication frame received by the communicator 22. The start controller 23 starts the brake control each time the timing controller 24 outputs the interrupt signal, that is, at the timing of the synchronization frame as illustrated in FIG. 2.

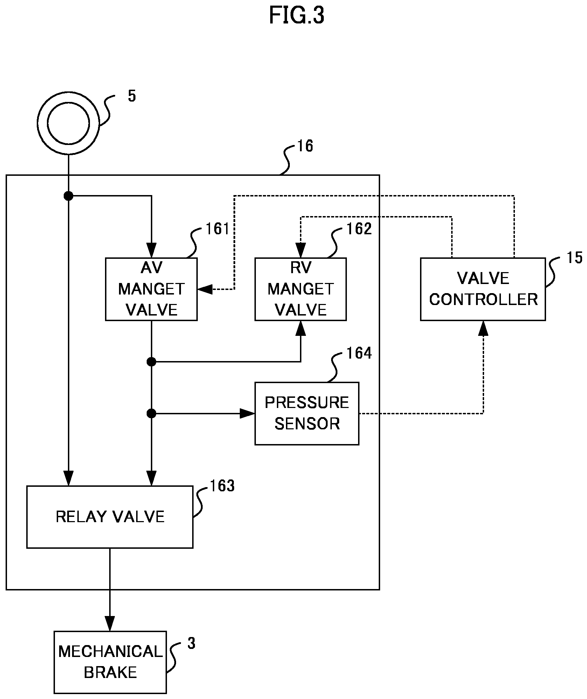

FIG. 3 is a block diagram illustrating example configurations of the valve controller and the pneumatic controller according to Embodiment 1. In FIG. 3, electric signals are indicated by dotted lines and flow of air is indicated by solid lines. The valve controller 15 acquires the control command outputted by the start controller 13. The valve controller 15 transmits a command to an AV magnet valve 161 and a command to an RV magnet valve 162 in accordance with the control command. The AV magnet valve 161 supplies air from a fluid source 5 and the RV magnet valve 162 releases, from a non-illustrated exhaust duct, air outputted by the AV magnet valve 161. A pressure sensor 164 detects pressure of air outputted by the AV magnet valve 161, which is a command pressure for a relay valve 163, and then the pressure sensor 164 transmits information on the command pressure to the valve controller 15. The valve controller 15 transmits a command to the AV magnet valve 161 and a command to the RV magnet valve 162 based on the command pressure acquired from the pressure sensor 164 so that pressure of the brake cylinder included in the mechanical brake 3, which is indicated by the control command is obtained. The relay valve 163 adjusts pressure of air from the fluid source 5 in accordance with the command pressure and outputs the pressure-adjusted air to the mechanical brake 3.

The valve controllers 15 and 25 have the same configuration and perform the same operation, and the pneumatic controllers 16 and 26 have the same configuration and perform the same operation. Similarly, the valve controller 25 adjusts the AV magnet valve and the RV solenoid that are included in the pneumatic controller 26 in accordance with a control command outputted by the start controller 23. The pneumatic controller 26 adjusts pressure of air from the fluid source 5 and outputs the pressure-adjusted air to the mechanical brake 4.

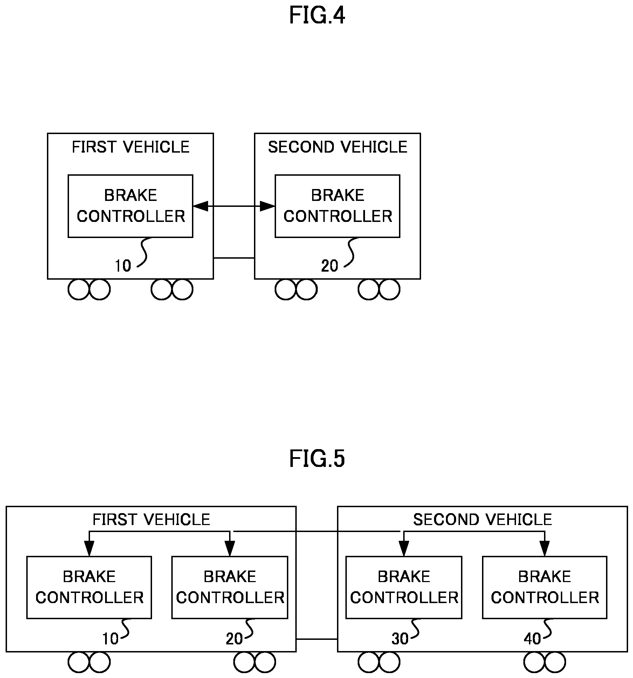

FIGS. 4 and 5 are drawings illustrating examples of a train equipped with the rail vehicle brake control device according to Embodiment 1. In the example of FIG. 4, each of the vehicles of the train is provided with one of the brake controllers 10 and 20. A first vehicle is provided with the brake controller 10 and a second vehicle is provided with the brake controller 20. In the example of FIG. 5, each of the bogies of the train is provided with one of brake controllers 10, 20, 30, and 40. The brake controllers 10, 20, 30, and 40 have the same configuration and perform the same operation. A first vehicle of the train is provided with the brake controllers 10 and 20 and a second vehicle of the train is provided with the brake controllers 30 and 40.

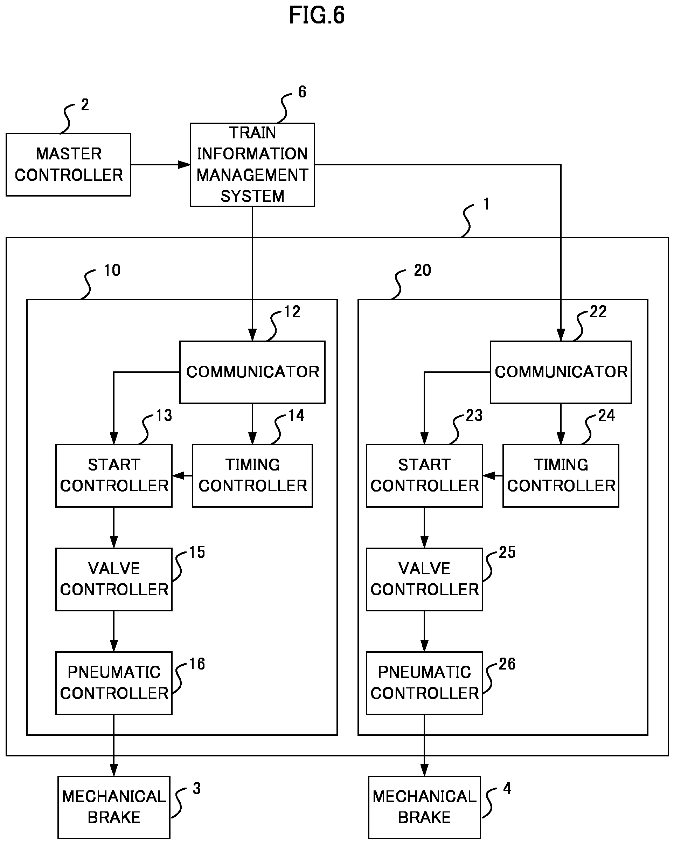

FIG. 6 is a block drawing illustrating another example configuration of the rail vehicle brake control device according to Embodiment 1. A train information management system 6 acquires a drive command from the master controller 2. The train information management system 6 transmits, to the brake controllers 10 and 20, communication frames indicated in FIG. 2 and each of which include a synchronization frame. In each communication frame, data following the synchronization frame contains the drive command. Upon acquiring the drive command, the communicator 12 transmits the drive command to the start controller 13. The timing controller 14 detects the synchronization frame of the communication frame received by the communicator 12 and outputs the interrupt signal to the start controller 13 each time the timing controller 14 detects the synchronization frame. The start controller 13 starts, in accordance with the drive command included in the communication frame received by the communicator 12, the brake control each time the timing controller 14 outputs the interrupt signal.

Similarly, upon acquiring the drive command, the communicator 22 transmits the drive command to the start controller 23. The timing controller 24 detects the synchronization frame of the communication frame received by the communicator 22 and outputs the interrupt signal to the start controller 23 each time the timing controller 24 detects the synchronization frame. The start controller 23 starts, in accordance with the drive command included in the communication frame received by the communicator 22, the brake control each time the timing controller 24 outputs the interrupt signal. The brake controllers 10 and 20 start the brake control in accordance with the drive command included in the communication frame at the timing of the synchronization frames included in the communication frames received from the train information management system 6.

In a case where the data included in the communication frame does not contain the drive command, the brake control device 1 illustrated in FIG. 1 receives the communication frame from the train information management system 6. The brake controllers 10 and 20 start, in accordance with the drive command acquired from the master controller 2, the brake control at the timing of the synchronization frame included in the communication frame received from the train information management system 6.

The brake control device 1 may perform brake control in such a manner that the brake control device 1 controls an electrical power convertor that drives a main electric motor made to operate as a power generator to generate a braking force. The above-mentioned control of the electrical power convertor at the timing of the synchronization frame enables suppression or prevention of a difference between the brake controllers 10 and 20 in timing of brake control.

As described above, in the brake control device 1 according to Embodiment 1 of the present disclosure, each of the brake controllers 10 and 20 starts brake control at the timing of the synchronization frame included in the communication frame that is transmitted or received by each of the brake controllers 10 and 20, thereby enabling suppression or prevention of the difference between the brake controllers 10 and 20 in timing of brake control. The suppression or prevention of the difference between the brake controllers 10 and 20 in timing of brake control enables a reduction in load on a vehicle coupler or a wheel caused by a difference between the timing of operation of the mechanical brake 3 and the timing of operation of mechanical brake 4.

### (Embodiment 2)

A brake control device 1 according to Embodiment 2 has a configuration similar to the configuration of the brake control device 1 according to Embodiment 1. In Embodiment 2, each of the brake controllers 10 and 20 starts, after the timing of the last synchronization frame, brake control at given intervals different from transmission intervals of communication frames. In the brake control device 1 according to Embodiment 2, after the timing controller 14 last outputs an interrupt signal, the start controller 13 starts brake control at the given intervals different from the transmission intervals of the communication frames in accordance with a drive command most-recently acquired by the command acquirer 11. Similarly, after the timing controller 24 last outputs an interrupt signal, the start controller 23 starts brake control at the given intervals different from the transmission intervals of the communication frames in accordance with a drive command most-recently acquired by the command acquirer 21.

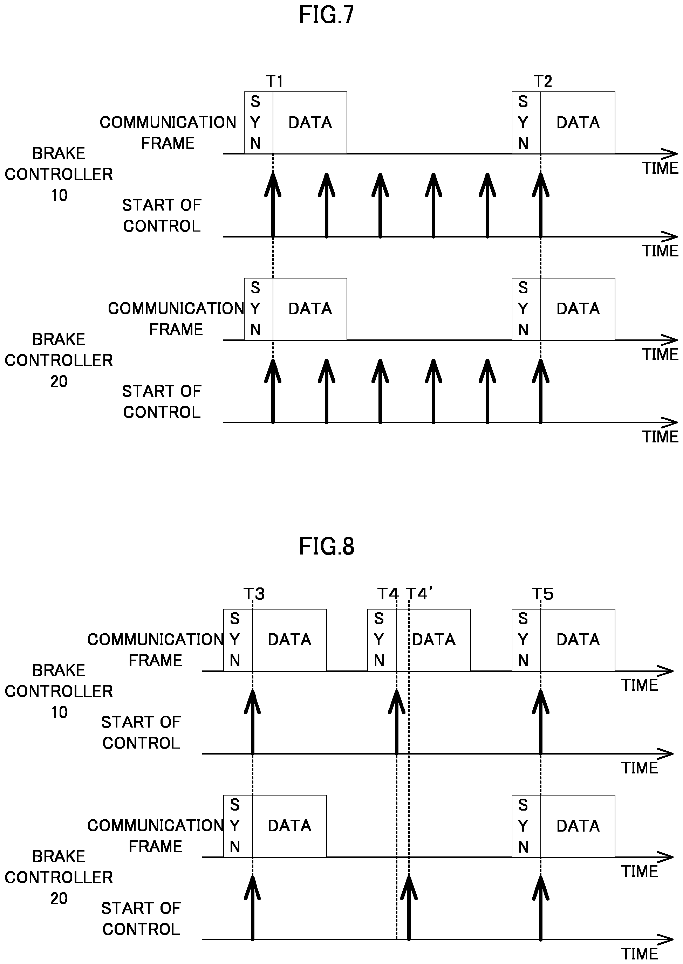

FIG. 7 is a drawing illustrating examples of the timing at which the brake controllers for the rail vehicles according to Embodiment 2 of the present disclosure start brake control. In the example of FIG. 7, the communicator 12 transmits communication frames, for example, at intervals of 100 milliseconds. The timing controller 14 outputs interrupt signals each time the timing controller 14 detects the synchronization frames included in the communication frames transmitted by the communicator 12. In the example of FIG. 7, the timing controller 14 outputs interrupt signals at the time T1 and at the time T2. The start controller 13 starts, in accordance with the drive command most-recently acquired by the command acquirer 11, the brake control each time the timing controller 14 outputs the interrupt signals. Also, the start controller 13 starts the brake control in accordance with the drive command most-recently acquired by the command acquirer 11 at given intervals that are shorter than the transmission intervals of the communication frame, for example, at intervals of 20 milliseconds, after the timing controller 14 last outputs an interrupt signal. In the example of FIG. 7, in the period from time T1 to time T2, the start controller 13 starts the brake control at the above given intervals.

Similarly, the timing controller 24 outputs an interrupt signal each time the timing controller 24 detects a synchronization frame included in a communication frame received by the communicator 22. In the example of FIG. 7, the timing controller 24 outputs interrupt signals at the time T1 and at the time T2. The start controller 23 starts, in accordance with the drive command most-recently acquired by the command acquirer 21, the brake control each time the timing controller 24 outputs the interrupt signals. Also, the start controller 23 starts, after the timing controller 24 last outputs an interrupt signal, the brake control in accordance with the drive command most-recently acquired by the command acquirer 21 at given intervals that are shorter than the transmission intervals of the communication frames, for example, at intervals of 20 milliseconds. In the example of FIG. 7, in the time period from time T1 to time T2, the start controller 23 starts the brake control at the above given intervals.

The start of brake control at the given intervals that are shorter than the transmission intervals of the communication frames after the last output of interrupt signals by the timing controllers 14 and 24 enables improvement in responsiveness of the brake controllers 10 and 20 to braking commands and enables suppression or prevention of a difference between the responses of the brake controllers 10 and 20 to the braking commands.

FIG. 8 is a drawing illustrating examples of the timing at which the brake controllers for rail vehicles according to Embodiment 2 start brake control. In the example of FIG. 8, the communicator 12 transmits communication frames, for example, at intervals of 40 milliseconds. The timing controller 14 outputs interrupt signals each time the timing controller 14 detects synchronization frames included in the communication frames transmitted by the communicator 12. In the example of FIG. 8, the timing controller 14 outputs the interrupt signals at times T3, T4, and T5. The start controller 13 starts, in accordance with a drive command most-recently acquired by the command acquirer 11, brake control each time the timing controller 14 outputs the interrupt signals. Also, the start controller 13 starts the brake control in accordance with the drive command most-recently acquired by the command acquirer 11, at given intervals longer than the transmission intervals of the communication frames, for example, at given intervals of 45 milliseconds, after the timing controller 14 last outputs an interrupt signal. In the example of FIG. 8, the start controller 13 starts the brake control at times T3, T4, and T5 at which the timing controller 14 outputs the interrupt signals.

Similarly, the timing controller 24 outputs interrupt signals each time the timing controller 24 detects synchronization frames included in communication frames received by the communicator 22. In the example of FIG. 8, the timing controller 24 outputs the interrupt signals at times T3 and T5. The start controller 23 starts, in accordance with a drive command most-recently acquired by the command acquirer 21, brake control each time the timing controller 24 outputs the interrupt signals. Also, after the timing controller 24 last outputs an interrupt signal, the start controller 23 starts the brake control in accordance with the drive command most-recently acquired by the command acquirer 21, at given intervals that are longer than the transmission intervals of the communication frames, for example, at intervals of 45 milliseconds.

In the example of FIG. 8, the communicator 22 does not receive the second communication frame at time T4. After time T3 at which the timing controller 24 last outputs an interrupt signal, the start controller 23 starts brake control in accordance with a drive command most-recently acquired by the command acquirer 21, at given intervals that are longer than the transmission intervals of the communication frames, for example, at intervals of 45 milliseconds. In the example of FIG. 8, the start controller 23 starts the brake control at time T4' at which the above given interval elapsed from time T3. Afterward, the start controller 23 starts brake control at time T5 at which the timing controller 24 outputs an interrupt signal. As a result, the brake control can be continued even in a case where a communication frame disappears.

In a case where a communication frame contains a braking command as in the brake control device 1 illustrated in FIG. 6, the start controller 13 starts, in accordance with a drive command included in the communication frame received by the communicator 12, brake control each time the timing controller 14 outputs an interrupt signal. After the timing controller 14 last outputs an interrupt signal, the start controller 13 starts the brake control in accordance with the drive command included in the communication frame most-recently acquired by the communicator 12, at the above given intervals. The start controller 13 may predict a change in braking force of the mechanical brake 3 based on the drive command included in the most-recently acquired communication frame. After the timing controller 14 last outputs the interrupt signal, the start controller 13 may start brake control in accordance with a drive command and the predicted change in braking force, at the above given intervals. For example, the start controller 13 adjusts, in accordance with the predictions, pressures of the brake cylinder that are included in the mechanical brake 3 and that are indicated by control commands, and then the start controller 13 transmits the control commands to the valve controller 15 at the above given intervals.

Similarly, the start controller 23 starts, in accordance with a drive command included in a communication frame received by the communicator 22, brake control each time the timing controller 24 outputs an interrupt signal. After the timing controller 24 last outputs an interrupt signal, the start controller 23 starts the brake control in accordance with the drive command included in the communication frame most recently acquired by the communicator 22, at the above given intervals. Similarly to the start controller 13, after the timing controller 24 last outputs the interrupt signal, the start controller 23 may start brake control in accordance with a drive command and a predicted change in braking force, at the above given intervals. For example, the start controller 23 adjusts, in accordance with the predications, pressures of the brake cylinder that are included in the mechanical brake 4 and that are indicated by control commands, and then the start controller 23 transmits the control commands to the valve controller 25 at the above given intervals.

The brake control is started at given intervals that are shorter than transmission intervals of the communication frames after the timing controllers 14 and 24 last outputs interrupt signals. As a result, the reliability of brake control by the brake controllers 10 and 20 can be improved together with suppression or prevention of a difference between responses of the brake controllers 10 and 20 to the braking commands.

As described above, in the brake control device 1 according to Embodiment 2 of the present disclosure, brake control is started at given intervals different from transmission intervals of the communication frames after the timing controllers 14 and 24 last output interrupt signals. As a result, responsiveness of the brake controllers 10 and 20 to braking commands and the reliability of brake control by the brake controllers 10 and 20 can be improved together with suppression or prevention of a difference between responses of the brake controllers 10 and 20 to the braking commands.

### (Embodiment 3)

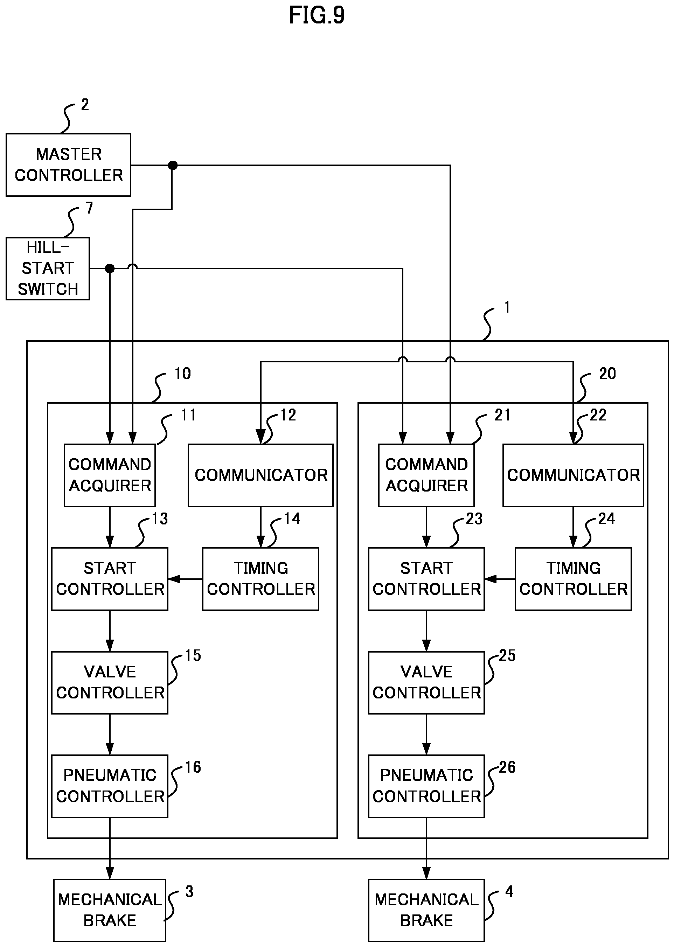

FIG. 9 is a block diagram illustrating an example configuration of a rail vehicle brake control device according to Embodiment 3 of the present disclosure. A brake control device 1 according to Embodiment 3 has a configuration similar to that of the brake control device 1 according to Embodiment 1. The brake control device 1 according to Embodiment 3 acquires not only a drive command from the master controller 2 but also a holding braking command from a hill-start switch 7 that is provided, for example, in the cab. The command acquirers 11 and 21 acquire holding braking commands from the hill-start switch 7. The holding braking commands are commands to start or stop holding brake control for keeping braking forces of the mechanical brakes 3 and 4 at a value greater than or equal to a given value. In a case where a train stops on a slope for example, a train operator turns on the hill-start switch 7 and operates the master controller 2 to move the train forward. The given value denotes, for example, a braking force necessary for preventing the train from stopping on the slope from moving backward in start. Upon being turned on, the hill-start switch 7 outputs the holding braking command to start holding brake control. Afterward, the train operator performs operation for starting moving the train and, when torque of an electric motor driving the train reaches a threshold for example, the hill-start switch 7 outputs a holding braking command for indicating stop of the holding brake control. The threshold may be determined by weights of vehicles of the train.

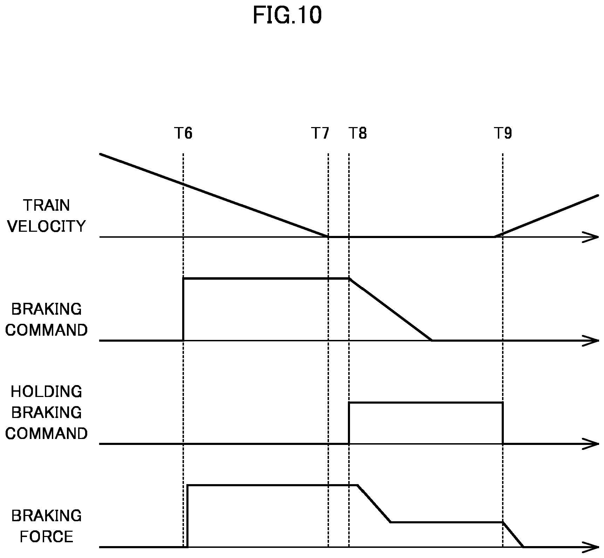

FIG. 10 is a drawing illustrating an example of a change in braking force in Embodiment 3. FIG. 10 illustrates a change in velocity of the train, a change in braking command, a change in holding braking command, and a change in braking force of all of the vehicles of the train. A drive command that is a braking command is inputted into the brake control device 1 at time T6. The brake control device 1 performs brake control in accordance with the drive command to produce a braking force. The train stops at time T7. The braking command is terminated at time T8 and a drive command that is a powering command is inputted into the brake control device 1. Also, the hill-start switch 7 is operated at time T8 and a holding braking command to start the holding brake control is inputted into the brake control device 1. A holding braking command for indicating stop the holding brake control is inputted into the brake control device 1 at time T9. As illustrated in FIG. 10, the braking force having the value greater than or equal to the given value is kept from time T8 to time T9 even after the braking command is terminated.

In a case where the command acquirer 11 acquires a holding braking command to start holding brake control, the start controller 13 starts holding brake control for keeping a braking force of the mechanical brake 3 at the value greater than or equal to the given value at the timing when the timing controller 14 outputs an interrupt signal. In a case where the command acquirer 11 acquires a holding braking command to stop the holding brake control after the start controller 13 starts the holding brake control, the start controller 13 stops the holding brake control at the timing when the timing controller 14 outputs an interrupt signal.

Similarly, in a case where the command acquirer 21 acquires a holding braking command to start holding brake control, the start controller 23 starts holding brake control for keeping a braking force of the mechanical brake 4 at the value greater than or equal to the given value at the timing when the timing controller 24 outputs an interrupt signal. In a case where the command acquirer 21 acquires a holding braking command to stop the holding brake control after the start controller 23 starts the holding brake control, the start controller 23 stops the holding brake control at the timing when the timing controller 24 outputs an interrupt signal.

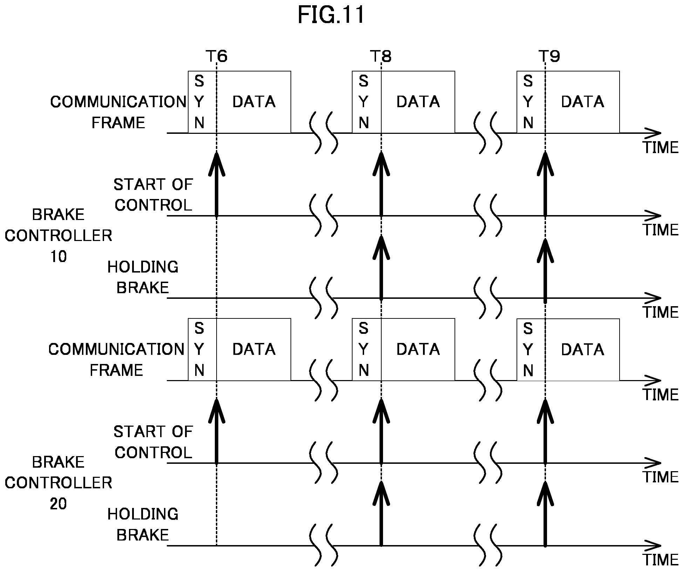

FIG. 11 is a drawing illustrating examples of the timing at which the brake controllers for rail vehicles according to Embodiment 3 start brake control. The timing controller 14 outputs an interrupt signal each time the timing controller 14 detects a synchronization frame of a communication frame transmitted by the communicator 12. The start controller 13 starts brake control each time the timing controller 14 outputs the interrupt signal, that is, at the timing of the synchronization frame as illustrated in FIG. 11. Also, the start controller 13 starts or stops holding brake control at the timing when the timing controller 14 outputs the interrupt signal, that is, at the timing of the synchronization frame as illustrated in FIG. 11. The start controller 13 starts brake control for increasing a braking force at time T6. At time T8, the start controller 13 starts brake control for decreasing the braking force and also starts holding brake control. At time T9, the start controller 13 starts brake control for keeping the decreased braking force and also stops the holding brake control. The train can be moved forward by (i) starting the brake control for maintaining the decreased braking force and (ii) stopping the holding brake control.

Similarly, the timing controller 24 outputs an interrupt signal each time the timing controller 24 detects a synchronization frame of a communication frame received by the communicator 22. The start controller 23 starts brake control each time the timing controller 24 outputs the interrupt signal, that is, at the timing of the synchronization frame as illustrated in FIG. 11. Also, the start controller 23 starts or stops holding brake control at the timing when the timing controller 24 outputs the interrupt signal. The start controller 23 starts brake control for increasing a braking force at time T6. The start controller 23 starts brake control for decreasing the braking force at time T8 and also starts holding brake control. The start controller 23 starts brake control for keeping the decreased braking force at time T9 and also stops the holding brake control.

As described above, in the brake control device 1 according to Embodiment 3 of the present disclosure, the holding brake control is started or stopped at the timing when the timing controllers 14 and 24 output interrupt signals, and thus the holding brake control by the timing controller 14 can be synchronized with the holding brake control by the timing controller 24 and the difference between the brake controllers 10 and 20 in responses to braking command and holding braking command can be suppressed or prevented.

Embodiments of the present disclosure are not limited to the above described embodiments and two or more embodiments of the above described embodiments may be optionally combined together. For example, the brake control device 1 according to Embodiment 3 may have a configuration in which the brake control is started at given intervals different from transmission intervals of the communication frames after the timing controllers 14 and 24 last outputs the interrupt signals as in the brake control device 1 according to Embodiment 2.

### Reference Signs List

- 1: Brake control device
- 2: Master controller
- 3, 4: Mechanical brake
- 5: Fluid source
- 6: Train information management system
- 7: Hill-start switch
- 10, 20, 30, 40: Brake controller
- 11, 21: Command acquirer
- 12,22: Communicator
- 13, 23: Start controller
- 14, 24: Timing controller
- 15, 25: Valve controller
- 16, 26: Pneumatic controller
- 161: AV magnet valve
- 162: RV magnet valve
- 163: Relay valve
- 164: Pressure sensor

## Claims

1. A rail vehicle brake control device (1) comprising:
a plurality of brake controllers (10, 20) at least one of which each bogie or each vehicle of a train includes, wherein each of the brake controllers (10, 20) comprises:
a communicator (12, 22) to transmit or receive a communication frame including a synchronization frame,
a command acquirer (11, 21) to acquire a drive command including at least one of a braking command indicating deceleration of the train or a powering command indicating acceleration of the train,
a timing controller (14, 24) to detect the synchronization frame of the communication frame transmitted or received by the communicator (12, 22) and to output an interrupt signal each time the timing controller (14, 24) detects the synchronization frame; and
a start controller (13, 23) to start brake control for adjusting a braking force produced by a brake device (3, 4) in accordance with at least one of deceleration indicated by the braking command included in the drive command most-recently acquired by the command acquirer (11, 21) or acceleration indicated by the powering command included in the most-recently acquired drive command each time the timing controller (14, 24) outputs the interrupt signal.

2. The rail vehicle brake control device (1) according to claim 1, wherein the start controller (13, 23) starts, after the timing controller (14, 24) last outputs the interrupt signal, the brake control at given periodic intervals that are different from transmission intervals of the communication frame.

3. The rail vehicle brake control device (1) according to claim 1 or 2, wherein
the command acquirer (11, 21) acquires a holding braking command to start or stop holding brake control for keeping the braking force of the brake device (3, 4) at a value greater than or equal to a given value, and
when the command acquirer (11, 21) acquires the holding braking command to start the holding brake control, the start controller (13, 23) starts the holding brake control at timing at which the timing controller (14, 24) outputs the interrupt signal and, when the command acquirer (11, 21) acquires the holding braking command to stop the holding brake control after the holding brake control is started, the start controller (13, 23) stops the holding brake control at timing at which the timing controller (14, 24) outputs the interrupt signal.

4. A method for controlling a rail vehicle brake comprising:
acquiring a drive command including at least one of a braking command indicating deceleration of a train or a powering command indicating acceleration of the train; and
causing each of a plurality of brake controllers (10, 20) to start brake control for adjusting a braking force produced by a brake in accordance with timing of a synchronization frame included in a communication frame transmitted or received by each of the plurality of brake controllers (10, 20) each of which is placed in a bogie or vehicle of the train and depending on at least one of deceleration indicated by the braking command included in a most-recently acquired drive command or acceleration indicated by the powering command included in the most-recently acquired drive command.

5. The method for controlling a rail vehicle brake according to claim 4, wherein each of the plurality of brake controllers (10, 20) is made to start the brake control at given periodic intervals different from transmission intervals of the communication frame after the timing of the last synchronization frame.

6. The method for controlling a rail vehicle brake according to claim 4 or 5 further comprising:
acquiring a holding braking command to start or stop holding brake control for keeping the braking force of the brake device (3, 4) at a value greater than or equal to a given value; and
starting, upon acquiring the holding braking command to start the holding brake control, the holding brake control in accordance with the timing of the synchronization frame and, stopping, upon acquiring the holding braking command to stop the holding brake control after the holding brake control is started, the holding brake control in accordance with the timing of the synchronization frame.

## Patentansprüche

1. Bremssteuervorrichtung (1) für ein Schienenfahrzeug, aufweisend:
eine Mehrzahl von Bremssteuereinrichtungen (10, 20), von denen jedes Fahrgestell oder jedes Fahrzeug eines Zuges mindestens eine aufweist, wobei jede der Bremssteuereinrichtungen (10, 20) aufweist:
einen Kommunikator (12, 22) zum Senden oder Empfangen eines Kommunikationsrahmens mit einem Synchronisationsrahmen,
eine Befehlserfassungseinrichtung (11, 21) zur Erfassung eines Fahrbefehls, der mindestens einen Bremsbefehl, der die Verzögerung des Zuges anzeigt, oder einen Antriebsbefehl, der die Beschleunigung des Zuges anzeigt, aufweist,
eine Zeitsteuereinrichtung (14, 24) zum Detektieren des Synchronisationsrahmens des von dem Kommunikator (12, 22) gesendeten oder empfangenen Kommunikationsrahmens und zum Ausgeben eines Unterbrechungssignals jedes Mal, wenn die Zeitsteuereinrichtung (14, 24) den Synchronisationsrahmen detektiert; und
eine Startsteuereinrichtung (13, 23) zum Starten einer Bremssteuerung zum Einstellen einer von einer Bremsvorrichtung (3, 4) erzeugten Bremskraft in Übereinstimmung mit zumindest einer von einer durch den Bremsbefehl, der in dem von der Befehlserfassungseinrichtung (11, 21) zuletzt erfassten Antriebsbefehl vorhanden ist, angezeigten Verzögerung oder einer durch den Antriebsbefehl, der in dem zuletzt erfassten Antriebsbefehl vorhanden ist, jedes Mal, wenn die Zeitsteuereinrichtung (14, 24) das Unterbrechungssignal ausgibt, angezeigten Beschleunigung.

2. Bremssteuervorrichtung (1) für ein Schienenfahrzeug nach Anspruch 1, wobei die Startsteuereinrichtung (13, 23), nachdem die Zeitsteuereinrichtung (14, 24) letztmals das Unterbrechungssignal ausgibt, die Bremssteuerung in vorgegebenen periodischen Intervallen, die sich von den Übertragungsintervallen des Kommunikationsrahmens unterscheiden, startet.

3. Bremssteuervorrichtung (1) für ein Schienenfahrzeug nach Anspruch 1 oder 2, wobei
die Befehlserfassungseinrichtung (11, 21) einen Haltebremsbefehl erfasst, um eine Haltebremssteuerung zu starten oder zu stoppen, um die Bremskraft der Bremsvorrichtung (3, 4) auf einem Wert zu halten, der größer oder gleich einem gegebenen Wert ist, und
wenn die Befehlserfassungseinrichtung (11, 21) den Haltebremsbefehl zum Starten der Haltebremssteuerung erfasst, die Startsteuereinrichtung (13, 23) die Haltebremssteuerung zu einem Zeitpunkt startet, zu dem die Zeitsteuereinrichtung (14, 24) das Unterbrechungssignal ausgibt, und wenn die Befehlserfassungseinrichtung (11, 21) den Haltebremsbefehl zum Stoppen der Haltebremssteuerung erfasst, nachdem die Haltebremssteuerung gestartet ist, die Startsteuereinrichtung (13, 23) die Haltebremssteuerung zu einem Zeitpunkt stoppt, zu dem die Zeitsteuereinrichtung (14, 24) das Unterbrechungssignal ausgibt.

4. Verfahren zum Steuern einer Schienenfahrzeugbremse, das aufweist:
Erfassen eines Fahrbefehls, der mindestens einen Bremsbefehl, der die Verzögerung eines Zuges angibt, oder einen Antriebsbefehl, der die Beschleunigung des Zuges angibt, aufweist; und
Bewirken, dass jede einer Mehrzahl von Bremssteuereinrichtungen (10, 20) eine Bremssteuerung zum Anpassen einer von einer Bremse erzeugten Bremskraft in Übereinstimmung mit einem Zeitpunkt eines Synchronisationsrahmens startet, der in einem von jeder der Mehrzahl von Bremssteuereinrichtungen (10, 20) gesendeten oder empfangenen Kommunikationsrahmen vorhanden ist, von denen jede in einem Fahrgestell oder Fahrzeug des Zuges angeordnet ist und von mindestens einer von einer Verzögerung, die durch den in einem zuletzt erfassten Fahrbefehl vorhandenen Bremsbefehl angegeben wird, oder einer Beschleunigung, die durch den in dem zuletzt erfassten Fahrbefehl vorhandenen Antriebsbefehl angegeben wird, abhängt.

5. Verfahren zur Steuerung einer Schienenfahrzeugbremse nach Anspruch 4, wobei jede der Mehrzahl von Bremssteuereinrichtungen (10, 20) veranlasst wird, die Bremssteuerung in vorgegebenen periodischen Intervallen, die sich von Übertragungsintervallen des Kommunikationsrahmens unterscheiden, nach dem Zeitpunkt des letzten Synchronisationsrahmens zu starten.

6. Verfahren zum Steuern einer Schienenfahrzeugbremse nach Anspruch 4 oder 5, des Weiteren aufweisend:
Erfassen eines Haltebremsbefehls zum Starten oder Stoppen der Haltebremssteuerung, um die Bremskraft der Bremsvorrichtung (3, 4) auf einem Wert zu halten, der größer oder gleich einem gegebenen Wert ist; und
Starten der Haltebremssteuerung in Übereinstimmung mit dem Zeitpunkt des Synchronisationsrahmens nach Erfassen des Haltebremsbefehls zum Starten der Haltebremssteuerung, und Stoppen der Haltebremssteuerung in Übereinstimmung mit dem Zeitpunkt des Synchronisationsrahmens nach Erfassen des Haltebremsbefehls zum Stoppen der Haltebremssteuerung in Übereinstimmung mit dem Zeitpunkt des Synchronisationsrahmens.

## Revendications

1. Dispositif de commande de frein de véhicule ferroviaire (1) comprenant :
une pluralité de dispositifs de commande de frein (10, 20) dont au moins un est inclus dans chaque bogie ou chaque véhicule d'un train, chacun des dispositifs de commande de frein (10, 20) comprenant :
un communicateur (12, 22) pour transmettre ou recevoir une trame de communication incluant une trame de synchronisation,
un acquéreur d'instruction (11, 21) pour acquérir une instruction de conduite comprenant une instruction de freinage indiquant la décélération du train ou une instruction de propulsion indiquant l'accélération du train,
un dispositif de commande de synchronisation (14, 24) pour détecter la trame de synchronisation de la trame de communication transmise ou reçue par le communicateur (12, 22) et pour émettre un signal d'interruption chaque fois que le dispositif de commande de synchronisation (14, 24) détecte la trame de synchronisation ; et
un dispositif de commande de démarrage (13, 23) pour démarrer la commande de frein afin de régler une force de freinage produite par un dispositif de freinage (3, 4) conformément à la décélération indiquée par l'instruction de freinage incluse dans l'instruction de conduite la plus récemment acquise par l'acquéreur d'instruction (11, 21) et/ou l'accélération indiquée par l'instruction de propulsion incluse dans l'instruction de conduite la plus récemment acquise chaque fois que le dispositif de commande de synchronisation (14, 24) émet le signal d'interruption.

2. Dispositif de commande de frein de véhicule ferroviaire (1) selon la revendication 1, le dispositif de commande de démarrage (13, 23) démarrant, après que le dispositif de commande de synchronisation (14, 24) a émis pour la dernière fois le signal d'interruption, la commande de frein à des intervalles périodiques donnés qui sont différents des intervalles de transmission de la trame de communication.

3. Dispositif de commande de frein de véhicule ferroviaire (1) selon la revendication 1 ou 2,
l'acquéreur d'instruction (11, 21) acquérant une instruction de freinage de maintien pour démarrer ou arrêter la commande de frein de maintien afin de maintenir la force de freinage du dispositif de freinage (3, 4) à une valeur supérieure ou égale à une valeur donnée, et
lorsque l'acquéreur d'instruction (11, 21) acquiert l'instruction de freinage de maintien pour démarrer la commande de frein de maintien, le dispositif de commande de démarrage (13, 23) démarrant la commande de frein de maintien à un moment auquel le dispositif de commande de synchronisation (14, 24) émet le signal d'interruption et, lorsque l'acquéreur d'instruction (11, 21) acquiert l'instruction de freinage de maintien pour arrêter la commande de frein de maintien après le démarrage de la commande de frein de maintien, le dispositif de commande de démarrage (13, 23) arrêtant la commande de frein de maintien à un moment auquel le dispositif de commande de synchronisation (14, 24) émet le signal d'interruption.

4. Procédé de commande d'un frein de véhicule ferroviaire comprenant les étapes consistant à :
acquérir une instruction de conduite comprenant une instruction de freinage indiquant la décélération d'un train et/ou une instruction de propulsion indiquant l'accélération du train ; et
amener chacun d'une pluralité de dispositifs de commande de frein (10, 20) à démarrer la commande de frein pour ajuster une force de freinage produite par un frein conformément à la synchronisation d'une trame de synchronisation incluse dans une trame de communication transmise ou reçue par chacun de la pluralité de dispositifs de commande de frein (10, 20) dont chacun est placé dans un bogie ou un véhicule du train et en fonction d'une décélération indiquée par l'instruction de freinage incluse dans une instruction de conduite acquise le plus récemment et/ou d'une accélération indiquée par l'instruction de propulsion incluse dans l'instruction de conduite acquise le plus récemment.

5. Procédé de commande d'un frein de véhicule ferroviaire selon la revendication 4, chacun de la pluralité de dispositifs de commande de frein (10, 20) étant amené à démarrer la commande de frein à des intervalles périodiques donnés différents des intervalles de transmission de la trame de communication après la synchronisation de la dernière trame de synchronisation.

6. Procédé de commande d'un frein de véhicule ferroviaire selon la revendication 4 ou 5 comprenant en outre les étapes consistant à :
acquérir une instruction de freinage de maintien pour démarrer ou arrêter la commande de frein de maintien afin de maintenir la force de freinage du dispositif de freinage (3, 4) à une valeur supérieure ou égale à une valeur donnée ; et
démarrer, lors de l'acquisition de l'instruction de freinage de maintien pour démarrer la commande de frein de maintien, la commande de frein de maintien conformément à la synchronisation de la trame de synchronisation et, arrêter, lors de l'acquisition de l'instruction de freinage de maintien pour arrêter la commande de frein de maintien après le démarrage de la commande de frein de maintien, la commande de frein de maintien conformément à la synchronisation de la trame de synchronisation.
